# EUROPÄISCHE PATENTSCHRIFT

(11) **EP 2 994 620 B1**
(45) Veröffentlichungstag und Bekanntmachung des Hinweises auf die Patenterteilung: **11.09.2019**
(21) Anmeldenummer: 14719188.6
(22) Anmeldetag: 31.03.2014
(51) Int. Cl.: F01D 25/30, F02C 7/24

(54) **SCHALLDÄMPFER FÜR EINEN ABGASKANAL**
MUFFLER FOR AN EXHAUST-GAS DUCT
SILENCIEUX POUR UN CANAL DE GAZ D'ÉCHAPPEMENT

(30) Priorität: 06.05.2013 AT 3752013
(43) Veröffentlichungstag der Anmeldung: 16.03.2016
(73) Patentinhaber: JORD INTERNATIONAL PTY LTD, St Leonards NSW 2065 (AU)
(72) Erfinder: PROCHAZKA, Peter Alexander, A- 6912 Hörbranz (AT)
(74) Vertreter: Hofmann, Ralf U.
(86) Internationale Anmeldenummer: PCT/AT2014/000065
(87) Internationale Veröffentlichungsnummer: WO 2014/179821

(56) Entgegenhaltungen:
- EP-A1- 1 628 004
- DE-A1-102008 017 743
- US-A- 5 532 439
- US-B1- 6 260 658

## Beschreibung

Die Erfindung bezieht sich auf einen Schalldämpfer für einen Abgaskanal, insbesondere einer Gasturbine, mit mehreren Schalldämpferelementen, zwischen denen Zwischenräume zum Durchströmen von Abgas liegen, wobei ein jeweiliges Schalldämpferelement in eine parallel zu einer Durchströmrichtung durch den Schalldämpfer liegende z-Richtung längserstreckt ausgebildet ist und bezogen auf die z-Richtung eine Länge, bezogen auf eine rechtwinkelig zur z-Richtung stehende x-Richtung, welche die Richtung der kleinsten Ausdehnung des Schalldämpferelementes darstellt, eine Dicke und in eine rechtwinkelig zur z-Richtung und zur x-Richtung stehende y-Richtung eine Breite aufweist, die kleiner als die Länge des Schalldämpferelementes ist, wobei die Breite eines jeweiligen Schalldämpferelementes weniger als die Hälfte, vorzugsweise weniger als ein Drittel, der auf die y-Richtung des jeweiligen Schalldämpferelementes bezogenen gesamten Ausdehnung des Schalldämpfers beträgt, und der Schalldämpfer eine Ausdehnung von mindestens 1m in alle Richtungen rechtwinkelig zur und parallel zur z-Richtung aufweist.

Bekannt sind solche Schalldämpfer als Kulissenschalldämpfer. Die einzelnen Schalldämpferelemente, welche auch als Kulissen bezeichnet werden, liegen parallel zueinander und erstrecken sich jeweils im Wesentlichen über die gesamte Breite des Abgaskanals. Durch die zwischen den benachbarten Schalldämpferelementen liegenden Zwischenräume strömt das Abgas. Bei einer Ausbildung eines solchen Kulissenschalldämpfers als Absorptionsschalldämpfer weisen die Kulissen ein in einem Rahmen angeordnetes poröses schallabsorbierendes Material auf, insbesondere werden hierfür Mineralfaserwerkstoffe eingesetzt. Die den Zwischenräumen zugewandten Seitenwände der Kulissen können mit einem Lochblech abgedeckt sein.

Bekannt sind im Weiteren Resonanzschalldämpfer, auch als Resonatorschalldämpfer, bezeichnet, die ebenfalls in Form von Kulissenschalldämpfern ausgebildet sein können. Solche können nach Art von Membranabsorbern (auch Plattenresonatoren oder Plattenschwinger genannt) oder Helmholtz-Resonatoren (auch als Lochresonatoren bezeichnet) ausgebildet sein.

Auch der Einsatz einer Kombination von Absorptionsschalldämpfern und Resonanzschalldämpfern ist bekannt.

Aus der Schrift DE 10 2008 017 743 A1 geht ein Schalldämpfer für Brennkraftmaschinen von Kraftfahrzeugen, Kompressoren, Gebläsen etc. hervor, welcher eine Vielzahl von winkelig zueinander ausgerichteten Schalldämpferelementen aufweist. Die Schalldämpferelemente können ein Metallgewebe, Kunststoff oder Papier zur Absorption von Schall umfassen. Die Montage des Schalldämpfers kann gemäß dieser Schrift beispielsweise durch Klemmen, Löten, Kleben und dergleichen erfolgen. In einem in dieser Schrift gezeigten Ausführungsbeispiel ist der Schalldämpfer mittels einer einzigen zentralen Schraubverbindung im Innenhohlraum eines Luftfilters befestigt.

Die EP 1 628 004 A1 zeigt einen Schalldämpfer der eingangs genannten Art, bei welchem Schalldämpferelemente aufeinandner gestapelt und parallel zueinander ausgerichtet sind. Ein ähnlicher Schalldämpfer geht auch aus der US 6,260,658 B1 hervor.

Aufgabe der Erfindung ist es einen vorteilhaften Schalldämpfer der eingangs genannten Art bereitzustellen, der sich durch eine effektive Schalldämmung auszeichnet.

Erfindungsgemäß gelingt dies durch einen Schalldämpfer mit den Merkmalen des Anspruchs 1.

Beim Schalldämpfer gemäß der Erfindung beträgt die Breite eines jeweiligen Schalldämpferelements weniger als die Hälfte, vorzugsweise weniger als ein Drittel, besonders bevorzugt weniger als ein Viertel, der auf die y-Richtung des jeweiligen Schalldämpferelements bezogenen gesamten Ausdehnung des Schalldämpfers. Zudem sind die Schalldämpferelemente mit ihren y-Richtungen nicht alle parallel zueinander ausgerichtet, sondern es sind vielmehr Schalldämpferelemente vorhanden, deren y-Richtungen winkelig, vorzugsweise rechtwinkelig, zueinander stehen.

Durch eine erfindungsgemäße Ausbildung kann eine hohe Schalldämpfung erreicht werden. Die Reflektionen zwischen den in der genannten Weise winkelig zueinander ausgerichteten Schalldämpferelementen führen zu für die Schalldämpfung vorteilhaften Spiegelschallquellen. In einer vorteilhaften Ausführungsform der Erfindung sind die Schalldämpferelemente alle gleich ausgebildet, wobei aber zumindest einige der Schalldämpferelemente gegenüber einer parallelen Ausrichtung zueinander um parallel zur z-Richtung stehende Achsen gegeneinander verdreht sind, vorzugsweise um 90°. Beispielsweise können die Schalldämpferelemente jeweils paarweise parallel zueinander liegend angeordnet sein, wobei die beiden Schalldämpferelemente einer solchen Zweiergruppe einen Abstand zwischen sich aufweisen. Benachbarte solche Zweiergruppen sind dann jeweils gegeneinander verdreht, vorzugsweise um 90°, und weisen einen Abstand voneinander auf. Pro Gruppe könnten auch mehr als zwei parallel zueinander ausgerichtete, voneinander beabstandete Schalldämpferelemente vorhanden sein, beispielsweise drei (sodass Dreiergruppen gebildet werden).

Gemäß der Erfindung weist zumindest ein Teil der Schalldämpferelemente bezogen auf die z-Richtung einen Mittelabschnitt und beidseitig daran anschließende Endkappen auf, welche das Schalldämpferelement bezogen auf die z-Richtung schließen. Der Mittelabschnitt bildet einen Absorptionsschalldämpfer und zumindest eine der Endkappen ist als Resonanzschalldämpfer ausgebildet. Vorzugweise sind die Schalldämpferelemente zumindest über Abschnitte ihrer Längserstreckung in z-Richtung quaderförmig ausgebildet, wobei die Seiten des Quaders parallel zur x-, y- und z-Richtung ausgerichtet sind. Insbesondere kann der Mittelabschnitt eines jeweiligen Schalldämpferelements eine solche Quaderform aufweisen. Die Endkappen weisen vorteilhafterweise sich verjüngende Enden auf, um ein günstiges An- und Abströmverhalten der Schalldämpferelemente zu erreichen.

In bevorzugten Ausführungsformen ist ein jeweiliges Schalldämpferelement zumindest über einen Abschnitt seiner Längserstreckung in die z-Richtung als Absorptionsschalldämpfer ausgebildet. Bei Absorptionsschalldämpfern kommt es zu einer Reibung der Gasmoleküle im Absorber, wodurch Schall in Wärme umgewandelt wird. Insbesondere weist ein jeweiliges Schalldämpferelement zumindest über einen Abschnitt seiner Längserstreckung ein innerhalb von Außenwänden liegendes Schallabsorptionsmaterial auf. Beispielsweise kann als Schallabsorptionsmaterial eine Mineralwolle eingesetzt werden. Günstigerweise kann der von den Außenwänden umgebene Innenraum vollständig mit dem Schallabsorptionsmaterial ausgefüllt sein.

Die Außenwände des Schalldämpferelements werden zumindest über einen Teil des Abschnitts, über welchen dieses als Absorptionsschalldämpfer ausgebildet ist, vorzugsweise von einem Lochblech gebildet. Vorzugsweise trifft dies für alle Außenwände zu, deren Oberflächennormalen in der x-y-Ebene (=von der x- und y-Richtung aufgespannte Ebene) liegen.

In einer vorteilhaften Ausführungsform der Erfindung ist ein jeweiliges Schalldämpferelement zumindest über einen Abschnitt seiner Längserstreckung in die z-Richtung als Resonanzschalldämpfer, insbesondere nach Art eines Helmholtz-Resonators, ausgebildet. Zur Ausbildung eines Resonanzschalldämpfers nach Art eines Helmholtz-Resonators weist der betreffende mindestens eine Abschnitt des Schalldämpferelementes einen inneren Hohlraum auf, der zumindest teilweise frei von Füllmaterial ist und der über zumindest eine Öffnung mit dem Außenraum verbunden ist. Vorzugsweise ist der Hohlraum 20 insgesamt nur mit Gas gefüllt oder weist zumindest eine Mehrzahl von gedachten Teilbereichen mit jeweils mindestens 5 mm³ Rauminhalt auf, über welche der Hohlraum 20 nur mit Gas gefüllt ist. Im Hohlraum kann gegebenenfalls mindestens ein schwingfähiges Resonanzteil angeordnet sein.

Ein Resonanz-Schalldämpfer dient vor allem zur Bedämpfung von niedrigen Frequenzen in einem Frequenzbereich.

In einer besonders vorteilhaften Ausführungsform der Erfindung sind die Schalldämpferelemente jeweils zumindest über einen Abschnitt ihrer auf die z-Richtung bezogenen Ausdehnung als Absorptionsschalldämpfer und über mindestens einen Abschnitt ihrer auf die z-Richtung bezogenen Ausdehnung als Resonanzschalldämpfer ausgebildet. Vorzugsweise ist hierbei ein jeweiliges Schalldämpferelement in seinem zuvor beschriebenen Mittelabschnitt als Absorptionsschalldämpfer und im Bereich mindestens einer seiner Endkappen, vorzugsweise beider Endkappen, als Resonanzschalldämpfer ausgebildet.

Weitere Vorteile und Einzelheiten der Erfindung werden im Folgenden anhand der beiliegenden Zeichnung erläutert. In dieser zeigen:
Fig. 1 eine schematische Darstellung eines Abschnittes der Abgasführung einer Gasturbine;
Fig. 2 eine Schrägsicht eines in einem Abgaskanal einer Abgasleitung angeordneten Schalldämpfers gemäß einem Ausführungsbeispiel der Erfindung, die Abgasleitung teilweise aufgeschnitten und der Schalldämpfer etwas vereinfacht dargestellt;
Fig. 3, 4 und 5 eine Schrägsicht, Draufsicht (Blickrichtung A in Fig. 5) und Seitenansicht (Blickrichtung B in Fig. 4) des Schalldämpfers von Fig. 2, der Schalldämpfer wiederum etwas vereinfacht dargestellt;
Fig. 6 eine Schrägsicht eines Schalldämpferelementes des Schalldämpfers in größerem Detail;
Fig. 7 eine Seitenansicht des Schalldämpferelementes in die x-Richtung;
Fig. 8 einen Querschnitt entlang der Linie CC von Fig. 7;
Fig. 9 eine Schrägsicht des mittig aufgeschnittenen Schalldämpferelements;
Fig. 10 eine Schrägsicht entsprechend Fig. 9, aber ohne das Schallabsorptionsmaterial;
Fig. 11 eine Schrägsicht einer der Endkappen, die Endkappe mittig aufgeschnitten;
Fig. 12 und 13 Schrägsichten von ersten und zweiten Verbindungsteilen zur Verbindung der einzelnen Schalldämpferelemente des Schalldämpfers.

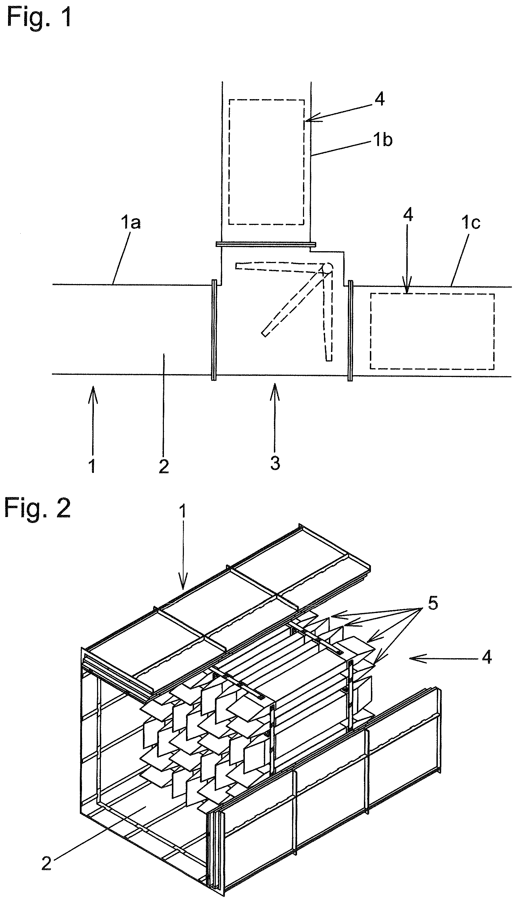

Fig. 1 zeigt mögliche Anordnungen eines erfindungsgemäßen Schalldämpfers in einer Abgasleitung 1, durch deren innenliegenden Abgaskanal 2 ein Abgasstrom geführt wird, insbesondere ein Abgasstrom einer Gasturbine.

In Fig. 1 ist ein Abschnitt 1a der von der Gasturbine kommenden Abgasleitung dargestellt. Mittels einer Gasweiche 3 wird die Abgasleitung in einen Zweig 1b, der zu einem Abgaskamin führt, und in einen Zweig 1c verzweigt, der insbesondere zu einem Abhitzekessel zur Erzeugung von Wasserdampf führen kann.

In Fig. 1 ist sowohl im Zweig 1b als auch im Zweig 1c ein erfindungsgemäßer Schalldämpfer 4 mit strichlierten Linien angedeutet. Der Schalldämpfer 4 in einem der beiden Zweige 1b oder 1c könnte auch, je nach den Anforderungen entfallen. Statt den in Fig. 1 angedeuteten Schalldämpfern 4 könnte auch stromaufwärts der Gasweiche 3, also im Abschnitt 1a, ein erfindungsgemäßer Schalldämpfer in der Abgasleitung 1 angeordnet sein, wie dies häufig bevorzugt sein wird. Grundsätzlich könnten auch sowohl im Abschnitt 1a als auch in den Zweigen 1b und/oder 1c erfindungsgemäße Schalldämpfer 4 angeordnet sein.

Ein Abgaskanal, in welchem ein erfindungsgemäßer Schalldämpfer eingesetzt wird, weist vorzugsweise eine Öffnungsweite von mindestens 1m in alle Richtungen rechtwinkelig zu seiner Längsrichtung auf.

Insbesondere kann die durch den Abgaskanal im Betrieb geführte Abgasmenge im Bereich von 5m³/s bis über 1.600m³/s und mehr betragen.

Solche Abgasströme von Gasturbinen weisen Temperaturen von über 400°C, beispielsweise im Bereich von 480°C bis 620°C, auf, sodass ein darin angeordneter Schalldämpfer hohen Temperaturbelastungen und großen Temperaturänderungen im Dauerbetrieb standhalten muss.

Fig. 2 zeigt die Anordnung eines erfindungsgemäßen Schalldämpfers 4 im Abgaskanal 2 der Abgasleitung 1 (=innerer Hohlraum der Abgasleitung 1), wobei die Abgasleitung 1 aufgeschnitten dargestellt ist. Die Querschnittsfläche des Abgaskanals 2 ist rechteckig, vorzugsweise quadratisch. Entsprechend besitzt die Abgasleitung 1 im Querschnitt gesehen rechteckige, vorzugsweise quadratische, Innen- und Außenkonturen.

Der Schalldämpfer 4 liegt an den Innenwänden der Abgasleitung 1 an oder weist von diesen einen so geringen Abstand auf, dass die Querschnittsfläche des Abgaskanals 2 zumindest zu mehr als 95% vom Schalldämpfer 4 eingenommen wird (wobei Zwischenräume zwischen Elementen des Schalldämpfers zum Schalldämpfer gehören).

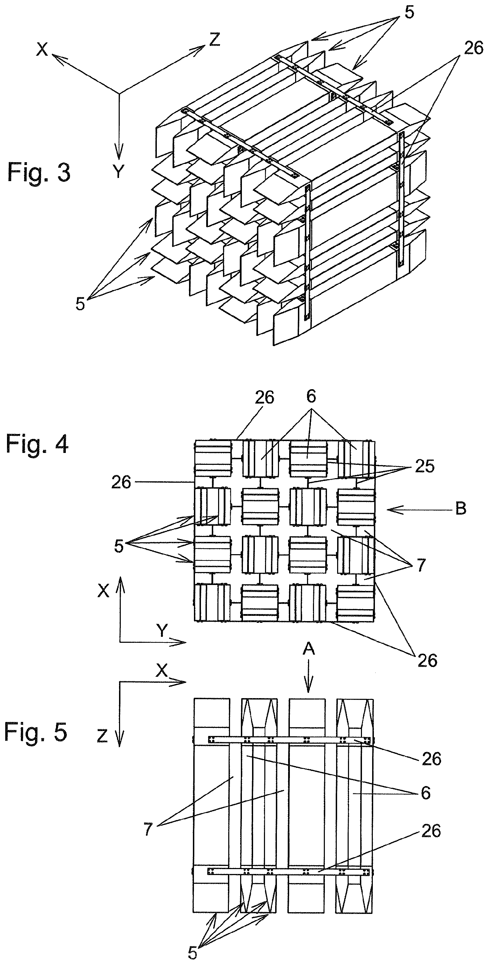

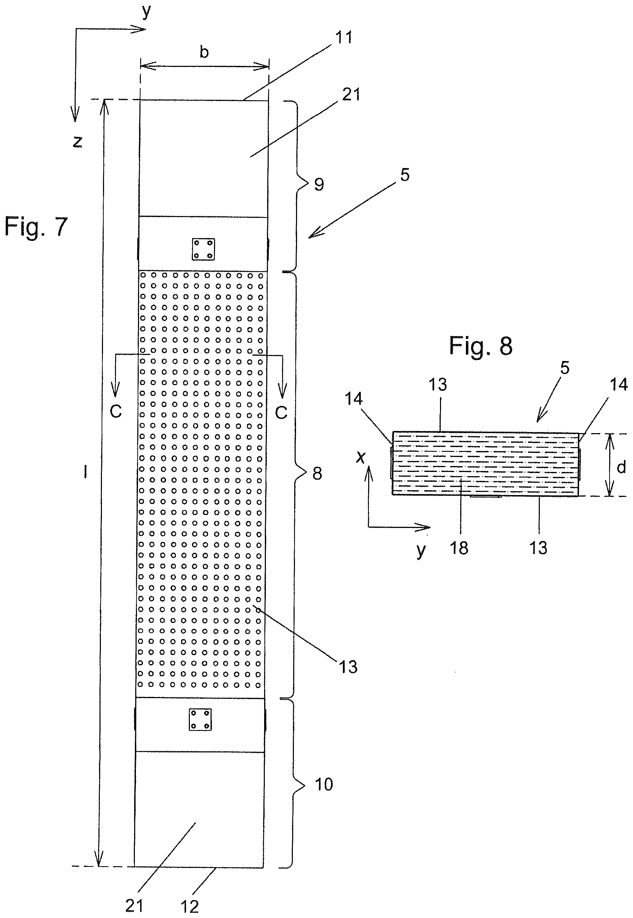

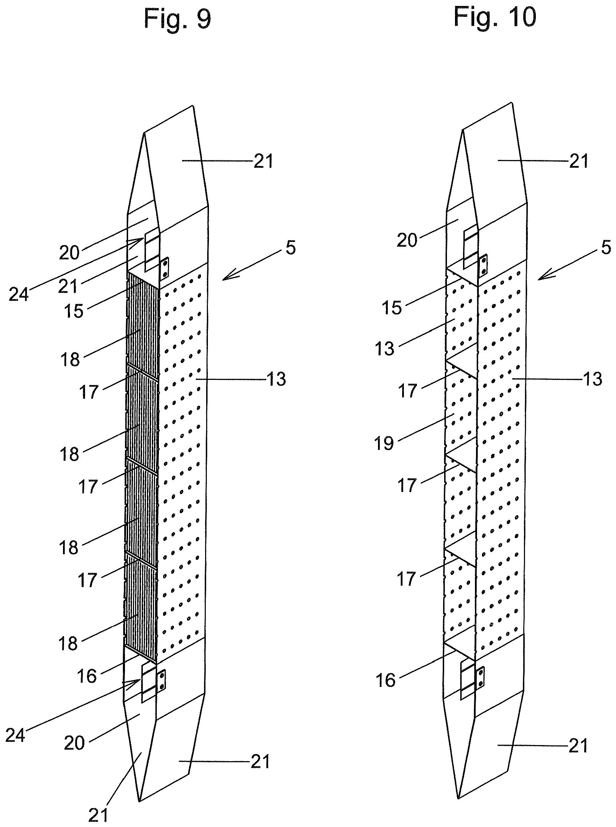

Ein Ausführungsbeispiel eines Schalldämpfers gemäß der Erfindung ist in den Fig. 3 bis 13 ohne die Abgasleitung dargestellt.

Der Schalldämpfer umfasst eine Mehrzahl von Schalldämpferelementen 5, vorzugweise mehr als 15, besonders bevorzugt mehr als 20. Im Ausführungsbeispiel besitzt der Schalldämpfer 32 Schalldämpferelemente 5.

Zwischen den Schalldämpferelementen 5 liegen Zwischenräume 6, 7. Durch diese strömt das Abgas durch den Schalldämpfer in eine Durchströmrichtung durch den Schalldämpfer. Diese liegt im Betriebszustand des Schalldämpfers parallel zur Längsrichtung des Abgaskanals 2.

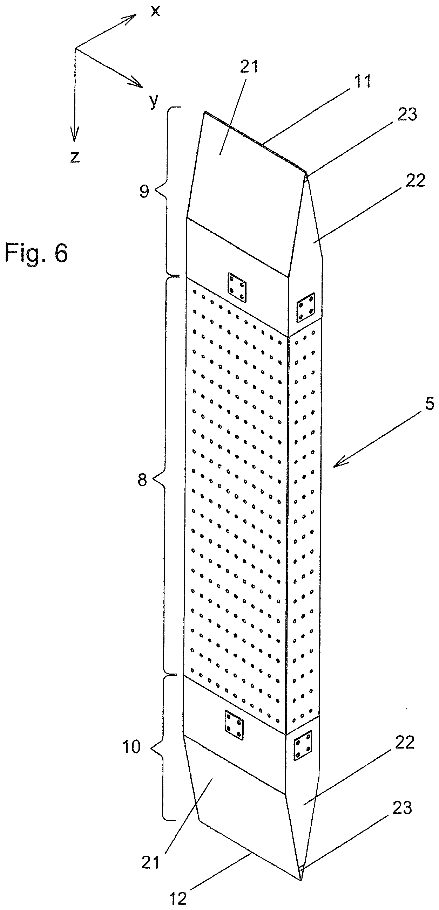

Ein einzelnes Schalldämpferelement ist in den Fig. 6 bis 11 im Detail dargestellt. Im Ausführungsbeispiel sind alle Schalldämpferelemente 5 gleich ausgebildet, wie dies besonders bevorzugt ist. Grundsätzlich könnten auch in verschiedener Weise ausgebildete Schalldämpferelemente 5 vorgesehen sein. Vorzugsweise sind hierbei zumindest die äußeren Formen aller Schalldämpferelemente 5 gleich ausgebildet, was aber nicht zwingend ist.

Die Schalldämpferelemente 5 sind in eine Richtung längserstreckt ausgebildet, die in dieser Schrift als z-Richtung bezeichnet wird (=Richtung einer z-Achse des Schalldämpferelements 5). Die z-Richtung liegt parallel zur Durchströmrichtung durch den Schalldämpfer. Im innerhalb des Abgaskanals 2 angeordneten Betriebszustand des Schalldämpfers liegt die z-Richtung also parallel zur Längsrichtung des Abgaskanals 2. Bezogen auf die z-Richtung weist ein jeweiliges Schalldämpferelement 5 eine Länge I auf.

Ein jeweiliges Schalldämpferelement 5 besitzt in einer rechtwinkelig zur z-stehenden Richtung, welche in dieser Schrift als x-Richtung bezeichnet wird (=Richtung einer x-Achse), seine kleinste Ausdehnung. In die x-Richtung besitzt das Schalldämpferelement 5 eine Dicke d (=größte Ausdehnung des Schalldämpferelements5 bezogen auf die x-Richtung).

In eine rechtwinkelig zur z-Richtung und zur x-Richtung stehende Richtung, die in dieser Schrift als y-Richtung bezeichnet wird (=Richtung einer y-Achse), besitzt ein jeweiliges Schalldämpferelement 5 eine Breite b.

Im Ausführungsbeispiel ist die Breite b eines jeweiligen Schalldämpferelementes 5 über seine gesamte Ausdehnung in die z-Richtung konstant und die Länge I eines jeweiligen Schalldämpferelementes 5 ist über seine gesamte Ausdehnung in die y-Richtung konstant.

Die Länge I eines jeweiligen Schalldämpferelements 5 ist größer als die Breite b und somit natürlich auch größer als die Dicke d. Vorzugsweise beträgt die Länge I mehr als das Dreifache der Breite b, besonders bevorzugt mehr als das Fünffache.

Die Breite b beträgt vorzugsweise mehr als das Doppelte der größten Dicke d des jeweiligen Schalldämpferelementes 5.

Ein jeweiliges Schalldämpferelement 5 besitzt bezogen auf seine Ausdehnung in die z-Richtung einen Mittelabschnitt 8 und beidseitig an den Mittelabschnitt 8 anschließende Endkappen 9, 10, welche an die beiden auf die z-Richtung bezogenen Enden 11, 12 des Schalldämpferelementes 5 anschließende Abschnitte der Längserstreckung des Schalldämpferelementes 5 bilden.

Die Endkappen 9, 10 schließen den Mittelabschnitt 8 und das gesamte Schalldämpferelement 5 bezogen auf die z-Richtung.

Ein jeweiliges Schalldämpferelement 5 ist im Ausführungsbeispiel über den Mittelabschnitt 8 und über an die Mittelabschnitte 8 anschließende Teilabschnitte der Endkappen 9, 10 quaderförmig ausgebildet. Über Endabschnitte der Endkappen 9, 10, die an das jeweilige Ende 11, 12 der Endkappen 9, 10 anschließen, verringert sich die Dicke d des Schalldämpferelementes 5 zum jeweiligen Ende 11, 12 des Schalldämpferelementes 5 hin kontinuierlich. Die dem Abgasstrom entgegengerichtete Endkappe 9 leitet den auf das Schalldämpferelement 5 auftreffenden Abgasstrom um das Schalldämpferelement 5. Die in Strömrichtung des Abgasstroms gerichtete Endkappe 10 führt den geteilten Abgasstrom wieder zusammen.

Die vom Mittelabschnitt 8 und von den an den Mittelabschnitt anschließenden Teilabschnitten der Endkappen 9, 10 gebildete Quaderform ist mit ihren Seiten parallel zur x-, y- und z-Richtung ausgerichtet, d.h. die Breitseiten des Mittelabschnitts 8 und der daran anschließenden Teilabschnitte der Endkappen 9, 10 liegen in parallelen, von der y- und z-Richtung aufgespannten Ebenen, die Schmalseiten des Mittelabschnitts 8 und der daran anschließenden Teilabschnitte der Endkappen 9, 10 liegen in parallelen, von der x- und z-Richtung aufgespannten Ebenen und gedachte stirnseitige Flächen am Ende der Quaderform liegen in parallelen von der x- und y-Richtung aufgespannten Ebenen.

Die an die Enden 11, 12 anschließenden, sich verjüngenden Endabschnitte der Endkappen 9, 10 weisen in einer Ansicht in y-Richtung eine im Wesentlichen dreieckige Außenkontur auf, wobei die beim jeweiligen Ende 11, 12 liegende Spitze des Dreiecks abgerundet ausgebildet ist.

Beispielsweise könnten die Endkappen 9, 10 auch über ihre gesamte Erstreckung in z-Richtung sich verjüngend ausgebildet sein und lediglich der Mittelabschnitt 8 eine Quaderform wie beschrieben aufweisen.

Die Außenwände 13, 14 des Schalldämpferelementes 5 im Bereich des Mittelabschnitts 8 werden von Lochblechen gebildet. Im Ausführungsbeispiel sind sowohl die breitseitigen Außenwände 13 als auch die schmalseitigen Außenwände 14 über ihre gesamten Ausdehnungen über den Mittelabschnitt 8 Lochbleche, wie dies bevorzugt ist. Beispielsweise könnten auch nur die breitseitigen Außenwände 13 oder nur die schmalseitigen Außenwände 14 von Lochblechen gebildet werden oder die breitseitigen Außenwände 13 und/oder schmalseitigen Außenwände 14 könnten nicht über ihre gesamten Ausdehnungen über den Mittelabschnitt 8 gelocht sein.

Vorteilhafterweise werden zumindest mehr als 80% der gesamten Fläche der Außenwände 13, 14 des Mittelabschnitts 8 von Lochblechen gebildet.

Zwischen dem Mittelabschnitt 8 und der jeweiligen Endkappe 9, 10 befindet sich im Inneren des Schalldämpferelementes 5 jeweils eine Trennwand 15, 16, die den Innenraum 19 des Mittelabschnitts 8 zur jeweiligen Endkappe 9, 10 hin abschließt. Der Innenraum 19 des Mittelabschnitts 8 ist im Weiteren durch Zwischenwände 17, die in z-Richtung voneinander beabstandet im Bereich zwischen den Trennwänden 15, 16 angeordnet sind, in mehrere Teilräume unterteilt. In diesen Teilräumen ist jeweils ein Schallabsorptionsmaterial 18 angeordnet.

Die Zwischenwände 17 könnten auch entfallen. Vorzugsweise ist der Innenraum 19 des Mittelabschnitts 8, abgesehen von den gegebenenfalls vorhandenen Zwischenwänden 17, vollständig mit dem Schallabsorptionsmaterial 18 ausgefüllt.

Die Mittelabschnitte 8 der Schalldämpferelemente 5 bilden somit Absorptionsschalldämpfer. Das Schallabsorptionsmaterial ist in bekannter Weise porös ausgebildet. Beispielsweise handelt es sich um eine Mineralwolle oder Mineralfaserplatte.

Die Endkappen 9, 10 weisen jeweils einen inneren Hohlraum 20 auf. Dieser wird von breitseitigen Außenwänden 21, die zum jeweiligen Ende 11, 12 des Schalldämpferelementes 5 hin zusammenlaufen und an diesem miteinander verbunden sind, von schmalseitigen Außenwänden 22, die sich zum jeweiligen Ende 11, 12 hin bezogen auf ihre Erstreckung in die x-Richtung verjüngen, und von der jeweiligen Trennwand 15, 16 begrenzt, welche den Hohlraum 20 der jeweiligen Endkappe 9, 10 vom Innenraum 19 des Mittelabschnitts 8 trennt. Der Hohlraum 20 einer jeweiligen Endkappe 9, 10 ist über mindestens eine Öffnung 23 mit dem außerhalb des Schalldämpferelementes 5 liegenden Außenraum verbunden. Im Ausführungsbeispiel enden hierzu die schmalseitigen Außenwände 22 im Abstand vom jeweiligen Ende 11, 12 des Schalldämpferelementes 5, sodass der Freiraum zwischen dem Ende der schmalseitigen Außenwand 22 und dem Ende 11, 12 des Schalldämpferelementes 5 eine jeweilige Öffnung 23 bildet.

Stattdessen oder zusätzlich hierzu könnte beispielsweise mindestens eine Bohrung in mindestens einer der schmalseitigen Außenwände 22 und/oder mindestens einer der breitseitigen Außenwände 21 vorhanden sein.

Es könnte auch nur eine einzelne Öffnung 23 pro Endkappe 9, 10 vorhanden sein.

Im Ausführungsbeispiel ist im Hohlraum 20 einer jeweiligen Endkappe 9, 10 ein schwingfähiges Resonanzteil 24 angeordnet. Dieses kann auch als "Schwinggabel" bezeichnet werden. Das Resonanzteil 24 ist an der Innenseite einer der den Hohlraum 20 begrenzenden Wände 21, 22, 15, 16 angebracht und kragt von dieser aus. Der auskragende Teil ist insbesondere plattenförmig oder auch stabförmig ausgebildet. Im Ausführungsbeispiel ist der auskragende Teil plattenförmig ausgebildet und besitzt zwei von seinem freien Ende ausgehende Schlitze. Es könnte auch eine andere Anzahl von Schlitzen vorgesehen sein. Auch könnte das Resonanzteil 24 beispielsweise zwei U-förmig auskragende Teile aufweisen, die von einem mit der Wand verbundenen Basissteg abstehen.

Das Resonanzteil 24 besteht vorzugsweise aus Metall.

Ein solches Resonanzteil 24 könnte auch entfallen oder es könnte mehr als ein Resonanzteil 24 im Hohlraum 20 angeordnet sein. Abgesehen von gegebenenfalls vorhandenen Resonanzteilen ist der Hohlraum 20 frei von darin angeordneten festen Materialien, also nur gasgefüllt.

Die Endkappen 9, 10 sind somit als Resonanzschalldämpfer ausgebildet, insbesondere als Helmholtz-Resonatoren. Bei Resonanzschalldämpfern wird die Schallenergie in kinetische Energie umgewandelt.

Wie aus den Fig. 2 bis 5 ersichtlich ist, sind die z-Richtungen der einzelnen Schalldämpferelemente 5 des Schalldämpfers 4 alle parallel zueinander ausgerichtet. Diese Richtung stellt die Durchströmrichtung durch den Schalldämpfer dar und wird im Folgenden als Z-Richtung des gesamten Schalldämpfers 4 bezeichnet, die also parallel zu den z-Richtungen der einzelnen Schalldämpferelemente 5 liegt. Im in den Abgaskanal 2 eingebauten Zustand des Schalldämpfers ist die Z-Richtung des Schalldämpfers in Längsrichtung des Abgaskanals 2 ausgerichtet.

In einer Ansicht des Schalldämpfers in Z-Richtung besitzt dieser eine quadratische Außenkontur, vgl. Fig. 4. Der Schalldämpfer könnte in Ansicht in Z-Richtung auch eine rechteckige Außenkontur besitzen. Die rechtwinkelig zur Z-Richtung und rechtwinkelig zueinander stehenden Richtungen, welche parallel zu den Seiten dieser rechteckigen oder quadratischen Außenkontur stehen, werden im Folgenden als X- und Y-Richtung bezeichnet.

Der Schalldämpfer 4 weist Schalldämpferelemente 5 auf, die mit ihren y-Richtungen, und daher auch mit ihren x-Richtungen winkelig zueinander stehen. Im Ausführungsbeispiel steht ein erster Teil der Schalldämpferelemente 5 mit seinen x- und y-Richtungen parallel zueinander und ein zweiter Teil der Schalldämpferelemente steht mit seinen x- und y-Richtungen ebenfalls parallel zueinander, wobei die y-Richtungen des zweiten Teils der Schalldämpferelemente 5 rechtwinkelig zu den y-Richtungen des ersten Teils der Schalldämpferelemente 5 steht. Der erste Teil der Schalldämpferelemente 5 ist hierbei mit seinen y-Richtungen parallel zur Y-Richtung des Schalldämpfers 4 ausgerichtet und der zweite Teil der Schalldämpferelemente 5 rechtwinkelig hierzu.

Es könnten auch Schalldämpferelemente 5 vorgesehen sein, deren x- und y-Richtungen andere Winkel miteinander einschließen und/oder deren x- und y-Richtungen andere Winkel mit der X- und Y-Richtung des Schalldämpfers 4 einschließen.

Die Breiten b der Schalldämpferelemente 5, also ihre Ausdehnungen in die y-Richtung des jeweiligen Schalldämpferelementes, sind wesentlich kleiner als die Ausdehnung des gesamten Schalldämpfers 4 bezogen auf die y-Richtung des jeweiligen Schalldämpferelementes 5. Zumindest beträgt die Breite b eines jeweiligen Schalldämpferelementes 5 weniger als die Hälfte der gesamten Ausdehnung des Schalldämpfers 4 bezogen auf die y-Richtung des jeweiligen Schalldämpferelementes 5, wobei ein Wert von weniger als ein Drittel bevorzugt und ein Wert von weniger als ein Viertel besonders bevorzugt ist.

Im Ausführungsbeispiel liegt die y-Richtung eines jeweiligen Schalldämpferelementes 5 parallel zu der in Ansicht gesehen quadratischen Außenkontur des Schalldämpfers 4. Andere Ausrichtungen der Schalldämpferelemente 5 und/oder andere Außenkonturen des Schalldämpfers 4 sind aber denkbar und möglich.

Im Ausführungsbeispiel liegen benachbarte Schalldämpferelemente 5 bezogen auf ihre y-Richtungen paarweise parallel zueinander. Es werden also Gruppen von jeweils zwei mit ihren y-Richtungen parallel zueinander liegenden Schalldämpferelementen 5 gebildet. Diese Gruppen sind in rechtwinkelig zueinander stehenden Reihen und Spalten angeordnet. Die y-Richtungen der Schalldämpferelemente 5 von innerhalb einer Reihe und innerhalb einer Spalte benachbarten Gruppen stehen rechtwinkelig zueinander.

Anstelle von Zweiergruppen könnten auch Gruppen von mehr als zwei Schalldämpferelementen gebildet werden, deren y-Richtungen parallel zueinander liegen. Zwischen benachbarten Schalldämpferelementen 5 einer jeweiligen Gruppe liegt jeweils ein Zwischenraum 6. Zwischen den einzelnen Gruppen liegen Zwischenräume 7.

Andere Anordnungen der Schalldämpferelemente 5 sind ebenfalls denkbar und möglich.

Parallel zu jeder rechtwinkelig zur Z-Richtung des Schalldämpfers stehenden Richtung kann eine Gerade gelegt werden, welche mindestens zwei, vorzugsweise mindestens vier Schalldämpferelemente 5 durchsetzt.

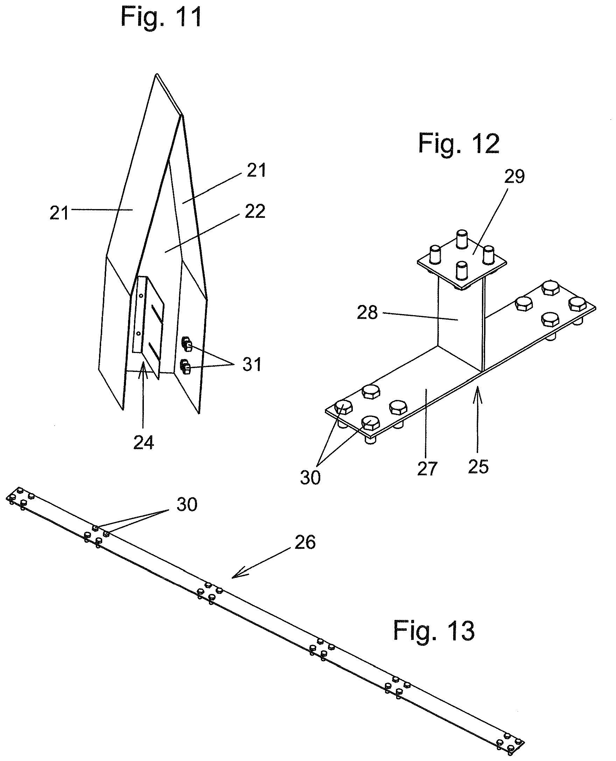

Zur Verbindung der einzelnen Schalldämpferelemente 5 sind in Fig. 12 und 13 dargestellte Verbindungsteile 25, 26 vorgesehen. Das Verbindungsteil 25 besitzt erste und zweite T-förmig zueinander stehende Schenkel 27, 28. Der erste Schenkel 27 wird mit den Schmalseiten der parallel zueinander stehenden Schalldämpferelemente 5 einer jeweiligen Gruppe verbunden und hält diese auf Abstand. Der zweite Schenkel 28 wird über ein an diesem angeordnetes Verbindungsteil 29 an der Breitseite eines Schalldämpferelementes 5 einer benachbarten Gruppe angebracht. Dadurch sind die benachbarten Gruppen miteinander verbunden und auf Abstand zueinander gehalten.

Zur Verbindung der im Schalldämpfer 4 randseitig liegenden Schalldämpferelemente 5 dienen die leistenförmigen Verbindungsteile 26. Diese werden mit den den Rand des Schalldämpfers 4 zugewandten Schmalseiten und Breitseiten der Schalldämpferelemente 5 verbunden.

Die Verbindung der Verbindungsteile 25, 26 mit dem jeweiligen Schalldämpferelement 5 erfolgt mittels mindestens einer Verbindungsschraube. Im Ausführungsbeispiel sind pro Verbindungen vier Verbindungsschrauben 30 vorgesehen. Die jeweilige Wand, mit der das betreffende Verbindungsteil 25,26 zu verbinden ist, besitzt eine Bohrung für eine jeweilige Verbindungsschraube 30 und eine an der Innenseite der Wand festgelegte, vorzugsweise angeschweißte, Mutter 31 zum Einschrauben der Verbindungsschraube 30.

Die Außenwände 13, 14, 21, 22, Trennwände 15, 16 und gegebenenfalls vorhandenen Zwischenwände 17 der Schalldämpferelemente 5 bestehen vorzugsweise aus Metall.

Ein erfindungsgemäßer Schalldämpfer weist vorzugsweise eine Ausdehnung von mindestens 1m in alle Richtungen rechtwinkelig zur und parallel zur Z-Richtung auf. Ein erfindungsgemäßer Schalldämpfer kann auch wesentlich größere Abmessungen aufweisen, z.B. von mehr als 3m in alle Richtungen rechtwinkelig zur und parallel zur Z-Richtung.

Unterschiedliche Modifikationen des gezeigten Ausführungsbeispiels sind denkbar und möglich, ohne den Bereich der Erfindung zu verlassen. So könnte der Schalldämpfer beispielsweise einen äußeren Rahmen aufweisen, der in Z-Richtung offen ist und die Schalldämpferelemente 5 umgibt.

Ein erfindungsgemäßer Schalldämpfer kann auch in anderen Abgaskanälen als solchen, die Abgase von Gasturbinen führen, eingesetzt werden, z. B. in Abgaskanälen von Kohlekraftwerken, Müllverbrennungsanlagen usw..

Wenn in dieser Schrift von einer Abgasleitung die Rede ist, so sind davon auch Abgaskamine umfasst.

Ein Abgaskanal, in dem ein erfindungsgemäßer Schalldämpfer eingesetzt wird, kann auch einen anderen als einen rechteckigen Querschnitt aufweisen, beispielsweise einen runden, insbesondere kreisrunden Querschnitt. Der Schalldämpfer wird hierbei mit einer korrespondierenden Außenkontur ausgebildet. Zu diesem Zweck können randseitige Schalldämpferelemente 5 verlängert ausgebildet sein und/oder randseitig zusätzliche Schalldämpferelemente 5 vorhanden sein und/oder randseitige Schalldämpferelemente 5 eingesetzt werden, welche eine von den mittleren Schalldämpferelementen abweichende Querschnittskontur aufweisen, beispielsweise eine abgerundete breitseitige Außenwand 13 auf der dem Rand des Schalldämpfers zugewandten Seite aufweisen.

**Legende zu den Hinweisziffern:**

| | | | |
|---|---|---|---|
| 1 | Abgasleitung | 15 | Trennwand |
| 1a | Abschnitt | 16 | Trennwand |
| 1b | Zweig | 17 | Zwischenwand |
| 1c | Zweig | 18 | Schallabsorptionsmaterial |
| 2 | Abgaskanal | 19 | Innenraum |
| 3 | Gasweiche | 20 | Hohlraum |
| 4 | Schalldämpfer | 21 | Außenwand |
| 5 | Schalldämpferelement | 22 | Außenwand |
| 6 | Zwischenraum | 23 | Öffnung |
| 7 | Zwischenraum | 24 | Resonanzteil |
| 8 | Mittelabschnitt | 25 | Verbindungsteil |
| 9 | Endkappe | 26 | Verbindungsteil |
| 10 | Endkappe | 27 | Schenkel |
| 11 | Ende | 28 | Schenkel |
| 12 | Ende | 29 | Verbindungsteil |
| 13 | Außenwand | 30 | Verbindungsschraube |
| 14 | Außenwand | 31 | Mutter |

## Patentansprüche

1. Schalldämpfer für einen Abgaskanal (2), insbesondere einer Gasturbine, mit mehreren Schalldämpferelementen (5), zwischen denen Zwischenräume (6, 7) zum Durchströmen von Abgas liegen, wobei ein jeweiliges Schalldämpferelement (5) in eine parallel zu einer Durchströmrichtung durch den Schalldämpfer liegende z-Richtung längserstreckt ausgebildet ist und bezogen auf die z-Richtung eine Länge (I), bezogen auf eine rechtwinkelig zur z-Richtung stehende x-Richtung, welche die Richtung der kleinsten Ausdehnung des Schalldämpferelementes (5) darstellt, eine Dicke (d) und in eine rechtwinkelig zur z-Richtung und zur x-Richtung stehende y-Richtung eine Breite (b) aufweist, die kleiner als die Länge (I) des Schalldämpferelementes (5) ist, wobei die Breite (b) eines jeweiligen Schalldämpferelementes (5) weniger als die Hälfte, vorzugsweise weniger als ein Drittel, der auf die y-Richtung des jeweiligen Schalldämpferelementes (5) bezogenen gesamten Ausdehnung des Schalldämpfers beträgt, und der Schalldämpfer eine Ausdehnung von mindestens 1m in alle Richtungen rechtwinkelig zur und parallel zur z-Richtung aufweist, **dadurch gekennzeichnet, dass** Schalldämpferelemente (5) vorhanden sind, deren y-Richtungen winkelig, vorzugsweise rechtwinkelig, zueinander stehen, und zumindest ein Teil der Schalldämpferelemente (5) bezogen auf die z-Richtung einen Mittelabschnitt (8) und beidseitig daran anschließende Endkappen (9, 10), welche das Schalldämpferelement (5) bezogen auf die z-Richtung schließen, aufweist, wobei der Mittelabschnitt (8) einen Absorptionsschalldämpfer bildet und zumindest eine der Endkappen (9, 10) als Resonanzschalldämpfer ausgebildet ist.

2. Schalldämpfer nach Anspruch 1, **dadurch gekennzeichnet, dass** alle Schalldämpferelemente (5) die gleiche äußere Form aufweisen, vorzugsweise insgesamt gleich ausgebildet sind.

3. Schalldämpfer nach Anspruch 1 oder 2, **dadurch gekennzeichnet, dass** zumindest zwei jeweils benachbarte und einen Zwischenraum (6) zwischen sich aufweisende Schalldämpferelemente (5) eine Gruppe von Schalldämpferelementen (5) bilden, deren y-Richtungen parallel zueinander liegen, wobei benachbarte und einen Zwischenraum (7) zwischen sich aufweisende solche Gruppen von Schalldämpferelementen (5) vorhanden sind, bei denen die parallelen y-Richtungen der Schalldämpferelemente (5) der einen Gruppe winkelig, insbesondere rechtwinkelig zu den parallelen y-Richtungen der Schalldämpferelemente (5) der anderen Gruppe stehen.

4. Schalldämpfer nach Anspruch 3, **dadurch gekennzeichnet, dass** die Gruppen von Schalldämpferelementen (5) in Reihen und Spalten angeordnet sind, wobei die y-Richtungen der Schalldämpferelemente (5) von innerhalb einer Reihe und innerhalb einer Spalte benachbarten Gruppen von Schalldämpferelementen (5) rechtwinkelig zueinander stehen.

5. Schalldämpfer nach einem der Ansprüche 1 bis 4, **dadurch gekennzeichnet, dass** ein jeweiliges Schalldämpferelement (5) zumindest über einen Abschnitt seiner auf die z-Richtung bezogenen Ausdehnung eine äußere Form eines Quaders aufweist, welcher mit seinen Seiten parallel zur x-, y- und z-Richtung ausgerichtet ist.

6. Schalldämpfer nach einem der Ansprüche 1 bis 5, **dadurch gekennzeichnet, dass** alle Schalldämpferelemente (5) bezogen auf die z-Richtung einen Mittelabschnitt (8) und beidseitig daran anschließende Endkappen (9, 10) aufweisen, wobei die Endkappen (9, 10) das Schalldämpferelement (5) bezogen auf die z-Richtung schließen.

7. Schalldämpfer nach einem der Ansprüche 1 bis 6, **dadurch gekennzeichnet, dass** sich die Dicke (d) eines jeweiligen Schalldämpferelements (5) zumindest über einen Endabschnitt der jeweiligen Endkappe (9, 10), der sich an das auf die z-Richtung bezogene jeweilige Ende (11, 12) des Schalldämpferelements (5) anschließt, zum jeweiligen Ende des Schalldämpferelements (5) hin verringert.

8. Schalldämpfer nach einem der Ansprüche 1 bis 7, **dadurch gekennzeichnet, dass** der Mittelabschnitt (8) eine äußere Form eines Quaders aufweist, der mit seinen Seiten parallel zur x-, y- und z-Richtung ausgerichtet ist.

9. Schalldämpfer nach einem der Ansprüche 1 bis 8, **dadurch gekennzeichnet, dass** die Außenwände (13, 14) eines jeweiligen Schalldämpferelements (5) zumindest über einen Abschnitt der auf die z-Richtung bezogenen Ausdehnung des Schalldämpferelements (5) zumindest teilweise von einem Lochblech gebildet werden.

10. Schalldämpfer nach einem der Ansprüche 1 bis 9, **dadurch gekennzeichnet, dass** der Mittelabschnitt (8) aller Schalldämpferelemente (5), einen Absorptionsschalldämpfer bildet.

11. Schalldämpfer nach einem der Ansprüche 1 bis 10, **dadurch gekennzeichnet, dass** zumindest eine der Endkappen (9, 10) aller Schalldämpferelemente (5), als Resonanzschalldämpfer ausgebildet ist.

12. Schalldämpfer nach einem der Ansprüche 1 bis 11, **dadurch gekennzeichnet, dass** die Endkappe (9, 10) oder die jeweilige Endkappe (9, 10) zur Ausbildung eines Resonanzschalldämpfers einen inneren Hohlraum (20) aufweist, der über zumindest eine Öffnung (23) in der Endkappe (9, 10) mit dem Außenraum verbunden ist.

13. Schalldämpfer nach Anspruch 12, **dadurch gekennzeichnet, dass** im Hohlraum (20) mindestens ein schwingfähiges Resonanzteil (24) angeordnet ist.

## Claims

1. A silencer for an exhaust-gas duct (2), in particular of a gas turbine, having a plurality of silencer elements (5) between which clearances (6, 7) for the throughflow of exhaust gas are located, wherein a respective silencer element (5) is designed to be elongated in a z-direction lying parallel to a throughflow direction through the silencer and has a length (1) relating to the z-direction, a thickness (d) relating to an x-direction, which is at a right angle to the z-direction and represents the direction of the smallest extent of the silencer element (5), and a width (b) in a y-direction, which is at a right angle to the z-direction and to the x-direction, said width being smaller than the length (l) of the silencer element (5), wherein the width (b) of a respective silencer element (5) is less than half, preferably less than a third, of the total extent of the silencer relating to the y-direction of the respective silencer element (5), and the silencer has an extent of at least 1m in all directions at a right angle to and parallel to the z-direction, **characterised in that** silencer elements (5) are present, whereof the y-directions are at an angle, preferably at a right angle, to one another and at least some of the silencer elements (5) have a central portion (8) relating to the z-direction and end caps (9, 10) which adjoin said central portion on both sides and close the silencer element (5) in relation to the z-direction, wherein the central portion (8) forms an absorption silencer and at least one of the end caps (9, 10) is formed as a resonance silencer.

2. The silencer according to Claim 1, **characterised in that** all silencer elements (5) have the same outer form, are preferably formed to be overall the same.

3. The silencer according to Claim 1 or 2, **characterised in that** at least two mutually neighbouring silencer elements (5) with a clearance (6) between them form a group of silencer elements (5) whereof the y-directions lie parallel to one another, wherein such groups of neighbouring silencer elements (5) with a clearance (7) between them are present, for which the parallel y-directions of the silencer elements (5) of the one group are at an angle, in particular at a right angle, to the parallel y-directions of the silencer elements (5) of the other group.

4. The silencer according to Claim 3, **characterised in that** the groups of silencer elements (5) are arranged in rows and columns, wherein the y-directions of the silencer elements (5) of neighbouring groups of silencer elements (5) within a row and within a column are at a right angle to one another.

5. The silencer according to one of Claims 1 to 4, **characterised in that** a respective silencer element (5) has, over a portion of its extent relating to the z-direction, the outer form of a cuboid which is aligned with its sides parallel to the x-, y- and z-direction.

6. The silencer according to one of Claims 1 to 5, **characterised in that** all silencer elements (5) have a central portion (8) relating to the z-direction and end caps (9, 10) which adjoin said central portion on both sides, wherein the end caps (9, 10) close the silencer element (5) in relation to the z-direction.

7. The silencer according to one of Claims 1 to 6, **characterised in that** the thickness (d) of a respective silencer element (5) reduces towards the respective end of the silencer element (5), at least over an end portion of the respective end cap (9, 10) which adjoins the respective end (11, 12) of the silencer element (5) in relation to the z-direction.

8. The silencer according to one of Claims 1 to 7, **characterised in that** the central portion (8) has the outer form of a cuboid, which is aligned with its sides parallel to the x-, y- and z-direction.

9. The silencer according to one of Claims 1 to 8, **characterised in that** the outer walls (13, 14) of a respective silencer element (5) are formed at least in part by a perforated plate, at least over a portion of the extent of the silencer element (5) relating to the z-direction.

10. The silencer according to one of Claims 1 to 9, **characterised in that** the central portion (8) of all silencer elements (5) forms an absorption silencer.

11. The silencer according to one of Claims 1 to 10, **characterised in that** at least one of the end caps (9, 10) of all silencer elements (5) is formed as a resonance silencer.

12. The silencer according to one of Claims 1 to 11, **characterised in that** the end cap (9, 10) or the respective end cap (9, 10) for forming the resonance silencer has an inner cavity (20) which is connected to the outside space via at least one opening (23) in the end cap (9, 10).

13. The silencer according to Claim 12, **characterised in that** at least one vibratable resonance part (24) is arranged in the cavity (20).

## Revendications

1. Silencieux pour un canal de gaz d'échappement (2), en particulier d'une turbine à gaz, avec plusieurs éléments de silencieux (5), entre lesquels se situent des espaces intermédiaires (6, 7) servant au passage des gaz d'échappement, dans lequel un élément de silencieux (5) respectif est formé de manière allongée dans une direction z parallèle à une direction de passage à travers le silencieux et présente par rapport à la direction z une longueur (I), par rapport à une direction x perpendiculaire à la direction z, laquelle constitue la direction de la plus petite dimension de l'élément de silencieux (5), une épaisseur (d), et, dans une direction y perpendiculaire à la direction z et à la direction x, une largeur (b) qui est inférieure à la longueur (I) de l'élément de silencieux (5), dans lequel la largeur (b) d'un élément de silencieux (5) respectif est inférieure à la moitié, de préférence à moins d'un tiers de la dimension totale du silencieux par rapport à la direction y de l'élément de silencieux (5) respectif, et le silencieux présente une dimension d'au moins 1 m dans toutes les directions perpendiculaires et parallèles à la direction z, **caractérisé en ce que** des éléments de silencieux (5) sont présents, dont les directions y forment un angle entre elles, de préférence un angle droit, et au moins une partie des éléments de silencieux (5) présente par rapport à la direction z une partie centrale (8) et des capuchons d'extrémité (9, 10) raccordés des deux côtés à celle-ci, lesquels ferment l'élément de silencieux (5) par rapport à la direction z, dans lequel la partie centrale (8) forme un silencieux à absorption et au moins un des capuchons d'extrémité (9, 10) est réalisé sous la forme d'un silencieux à résonance.

2. Silencieux selon la revendication 1, **caractérisé en ce que** tous les éléments de silencieux (5) présentent la même forme extérieure, de préférence sont tous réalisés de façon identique.

3. Silencieux selon la revendication 1 ou 2, **caractérisé en ce qu'**au moins deux éléments de silencieux (5) respectivement voisins et présentant entre eux un espace intermédiaire (6) forment un groupe d'éléments de silencieux (5), dont les directions y se situent parallèlement les unes aux autres, dans lequel de tels groupes d'éléments de silencieux (5) voisins et présentant entre eux un espace intermédiaire (7) sont présents, pour lesquels les directions y parallèles des éléments de silencieux (5) de l'un des groupes forment un angle, en particulier un angle droit, avec les directions y parallèles des éléments de silencieux (5) de l'autre groupe.

4. Silencieux selon la revendication 3, **caractérisé en ce que** les groupes d'éléments de silencieux (5) sont disposés en rangées et en colonnes, dans lequel les directions y des éléments de silencieux (5) de groupes d'éléments de silencieux (5), voisins à l'intérieur d'une rangée et à l'intérieur d'une colonne, forment un angle droit les uns par rapport aux autres.

5. Silencieux selon l'une quelconque des revendications 1 à 4, **caractérisé en ce qu'**un élément de silencieux (5) respectif présente sur au moins une partie de sa dimension par rapport à la direction z la forme extérieure d'un pavé droit, lequel est orienté avec ses faces parallèlement à la direction x, y et z.

6. Silencieux selon l'une quelconque des revendications 1 à 5, **caractérisé en ce que** tous les éléments de silencieux (5) présentent par rapport à la direction z une partie centrale (8) et des capuchons d'extrémité (9, 10) raccordés des deux côtés à celle-ci, dans lequel les capuchons d'extrémité (9, 10) ferment l'élément de silencieux (5) par rapport à la direction z.

7. Silencieux selon l'une quelconque des revendications 1 à 6, **caractérisé en ce que** l'épaisseur (d) d'un élément de silencieux (5) respectif, au moins sur une partie d'extrémité du capuchon d'extrémité (9, 10) respectif qui se raccorde à l'extrémité (11, 12) respective de l'élément de silencieux (5) par rapport à la direction z, diminue vers l'extrémité respective de l'élément de silencieux (5).

8. Silencieux selon l'une quelconque des revendications 1 à 7, **caractérisé en ce que** la partie centrale (8) présente une forme extérieure de pavé droit, qui est orientée avec ses faces parallèlement à la direction x, y et z.

9. Silencieux selon l'une quelconque des revendications 1 à 8, **caractérisé en ce que** les parois extérieures (13, 14) d'un élément de silencieux (5) respectif, au moins sur une partie de la dimension de l'élément de silencieux (5) par rapport à la direction z, sont formées au moins en partie par une tôle perforée.

10. Silencieux selon l'une quelconque des revendications 1 à 9, **caractérisé en ce que** la partie centrale (8) de tous les éléments de silencieux (5) forme un silencieux à absorption.

11. Silencieux selon l'une quelconque des revendications 1 à 10, **caractérisé en ce qu'**au moins un des capuchons d'extrémité (9, 10) de tous les éléments de silencieux (5) est réalisé sous la forme d'un silencieux à résonance.

12. Silencieux selon l'une quelconque des revendications 1 à 11, **caractérisé en ce que** le capuchon d'extrémité (9, 10) ou le capuchon d'extrémité (9, 10) respectif présente, pour la formation d'un silencieux à résonance, une cavité intérieure (20) qui est reliée à l'espace extérieur par l'intermédiaire d'au moins une ouverture (23) dans le capuchon d'extrémité (9, 10).

13. Silencieux selon la revendication 12, **caractérisé en ce qu'**au moins une pièce de résonance oscillante (24) est disposée dans la cavité (20).
